# EUROPEAN PATENT APPLICATION

(11) **EP 1 980 722 A2**
(43) Date of publication of application: **15.10.2008**
(21) Application number: 08251311.0
(22) Date of filing: 03.04.2008
(51) Int. Cl.: F01D 21/04, F01D 25/24

(54) **Gas turbine casing**

(30) Priority: 13.04.2007 GB 0707099
(71) Applicant: Rolls-Royce plc, 65 Buckingham Gate London SW1E 6AT (GB)
(72) Inventor: Pool, Clare Louise, Boulton Moor Derby, DE24 5AD (GB); Sathianathan, Sivasubramaniam Kathirgamathamby, Stretton Burton on Trent DE13 0FX (GB); Steadman, Richard John, Draycott-in-the-Clay Ashbourne, DE6 5BX (GB)
(74) Representative: Gunn, Michael Alan

(57) **Abstract**

Casings 30, 51 are utilised within gas turbine engines 10 in order to provide both an environmental containment for the engine core as well as inhibit release of debris should engine components fragment and fail in service. Traditionally, casings 30, 51 have taken the form of a solid containment shield to prevent debris and object release on percussive impingement with the casing. Such an approach avoids the uncertainties with respect to flap rupture propagation of the casing 30, 51 in use. However such casings are relatively thick and therefore provided a severe weight penalty in aircraft. By providing a casing 30, 51 which has a relatively thinner containment shield 31, 52 and an additional, where required, catch layer 32, 33 53 rupture of the containment shield 31, 52 can be allowed whilst the catch layer 32, 33, 53 prevents rupture propagation and therefore aperture 44, 54 development to a sufficient size to allow the debris to pass completely through the casing 30, 51 at all or with sufficient energy to cause damage.

## Description

The present invention relates to casings and more particularly to casings for gas turbine engines.

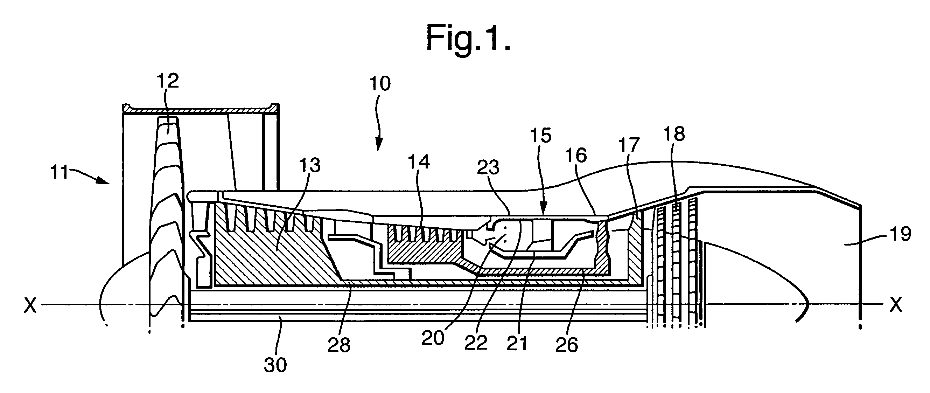

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts.

In view of the above it will be appreciated that an engine 10 incorporates casings about the core of the engine. In addition to providing environmental protection for the engine it will also be understood that the casing will be utilised in order to contain part fragments should the engine and in particular the fan blades disintegrate during operation. It will be understood that these fan blades rotate at high speeds and penetration of the casing (particularly if the gas turbine engine is used in an aircraft) may result in objects, if they should pass through the casing, impinging upon the fuselage of an aircraft or generally endangering parts of the aircraft about the engine, possibly damaging critical control and other assemblies. Casings are also used for containment on other parts of engines in addition to the low pressure casing.

In order to achieve this containment function the casing effectively acts as a containment shield about the engine core. The containment shield is specified to have sufficient resistance to fragment rupture to ensure that fragmented objects such as fan blades are retained within the engine during a failure. It will be understood that particularly fan blades have typically large root sections which will have high impact energy and therefore it is necessary to have a sufficiently robust containment provided by the casing in such circumstances. As engine sizes increase it will be understood that two problems arise. Firstly, the fragments, that is to say the fan blades become larger; secondly, in order to provide a sufficient containment function the casing will need to be thicker in order to contain the larger component fragments and also the casing itself will be larger to accommodate the engine core in normal use. In aircraft applications weight is a significant factor and therefore heavier casings are detrimental.

In accordance with aspects of the present invention there is provided a casing for a gas turbine engine, the casing comprising a containment shield and a catch layer associated to one side of the containment shield to restrain in use rupture propagation of the containment shield.

Typically, the catch layer lies over the containment shield. Alternatively, the catch layer is spaced from the containment shield with a gap between them. Possibly, the gap has a variable width across the association between the shield and catch layer.

Generally the catch layer has a variable thickness. Possibly the catch layer is formed from a woven or carbon bonded composite material. An example of such composite material is aramide.

Possibly, the containment shield has a variable thickness.

Possibly, the containment shield and catch layer are substantially parallel to each other. Alternatively, the containment shield and catch layer are angled relative to each other.

Generally, the containment shield comprises an annulus for containment of an engine core. Normally, the catch layer comprises an annulus generally concentric about the containment shield.

Possibly, a further material is provided between the containment shield and the catch layer.

Advantageously, the containment shield and catch layer are reciprocally sized and have reciprocal thicknesses to achieve a desired degree of restraint in use to rupture propagation.

Possibly, the catch layer is only associated with a part of the containment shield.

Generally, the casing is designed to be proportionate to a potential rupture threat determined by a rupture object coming into percussive contact with the casing in use. Generally, the percussive object utilised to determine the potential rupture threat is a fan blade or other parts of a gas turbine engine.

Also in accordance with aspects of the present invention there is provided a gas turbine engine including a casing as described above. Normally, in the gas turbine engine the catch layer is only associated with a containment shield at appropriate parts of the casing.

Aspects of the present invention will now be described by way of example only with reference to the accompanying drawings in which:-
Fig. 1 illustrates part of a casing in accordance with aspects of the present invention; and,
Fig. 2 illustrates a prior casing and present casing in accordance with aspects of the present invention subject to a rupture scenario.

As indicated above larger fan diameters in gas turbine engines result in blade root impacts during a so-called blade off event which are difficult to contain within existing casings. The previous approach was simply to add more material thickness to the fan casing where required but this approach has a significant weight penalty; whether that casing is formed from titanium or a composite material, it is both heavy and relatively expensive.

One reason for such prior casings being relatively heavy is the objective being defined as avoiding any rupture of the casing. However it will be understood that it is release of objects such as blade fragments about the engine which is important. In such circumstances provided the objects are retained it will be understood that the casing in terms of containment of fragmentation incidents has been successful. In accordance with aspects of the present invention an otherwise unacceptable containment shield for a particular expected object percussive impact is augmented with a catch layer. In such circumstances, although the objects may rupture the containment shield the catch layer prevents such objects passing completely through the containment shield and therefore retains the impact object within the environment of the engine, by at least inhibiting rupture or speed of rupture of the containment shield.

Aspects of the present invention combine an existing containment shield in the form of a fan case or a casing which can be formed from solid titanium, Armco (steel) or aluminium material with either an overlaid or possibly offset catch layer made from an appropriate material. The solid fan case alone will not fully contain impinging fan blade root fragments but allows holes, splits or flaps, that is to say ruptures, to appear in the casing during expected percussive impingement by an object. The action of the catch layer is to stop debris escaping through the holes as well as stop rupture flap propagation in use beyond a point where containment is lost. In such circumstances it can be considered that the catch layer acts as a bandage about the base containment shield. The action of the containment shield will be to absorb most of the impact energy of the percussive object impingement with normally the catch layer being flexible to restrain escape of debris as a result of such object impingements on the containment shield. The catch layer will be lighter and only associated with the containment shield where required.

It will be appreciated that large objects such as fan blade roots generally in the past have been contained within a containment shield without cracking or allowing rupture of the containment shield. However, the nature of such large object impingement upon casings is that the object will rupture the containment shield relatively and progressively. In use typically an initial contact will be relative to known parts of the casing and will deform and potentially rupture from a nucleation point progressively outwardly in rips creating flaps. The nature of a ripping action with regard to metals is that the ripping action absorbs energy progressively as a material is expanded and extended beyond the acceptable degree of elasticity. By providing a catch layer about a containment shield to the side opposite to object impingement, it will be understood that the rupture elasticity of the containment shield can be modified and extended to ensure appropriate energy absorption of the impingement object such that it cannot pass through the combination of the containment shield and the catch layer for release about the casing. A flap can be considered as a peeled back area to provide sufficient aperture size to allow the object to pass. Thus, provision of the catch layer which prevents flap development and therefore resists further rupture and debris distribution is advantageous.

Figure 1 provides a schematic cross section of one half of a casing 30 in accordance with aspects of the present invention. As can be seen the casing 30 essentially comprises a containment shield 31 formed as indicated above of an appropriate solid or other material such as titanium, Kevlar or aluminium. In accordance with aspects of the present invention a catch layer, or possibly, catch layers 32, 33 are provided at appropriate parts on the casing 31 where impingement from objects such as blade fragments are most likely to occur. It will be understood that a gas turbine engine is subject to centrifugal forces and rupture of the blade and fragmentation will generally spray those fragments radially from the high speed rotating shaft and therefore there is a relatively predictable distribution of fragment impingement sites within the casing 34.

The weight of the casing 30 in accordance with aspects of the present invention is important. In such circumstances as can be seen the containment shield 31 may have a variable thickness again to provide consistency with the potential rupture threat present at that particular part of the casing. Thus, in an area 31a it will be appreciated that no catch layer is provided in this part of the casing 30 as, either theoretically or experimentally, it is considered the thickness of the containment layer 31a will be sufficient to contain expected impingements in normal operational conditions. However in other parts of the casing 31 it will be noted as indicated above catch layers 32, 33 are provided. These catch layers 32, 33 may be of the same material type, composition and thickness or variable dependent again upon the expected potential rupture threat to the casing 30 at those incident parts. It will be understood it is by a combination of the effects of the containment shield 31 with an associated catch layer 32, 33 that the desired resistance to rupture propagation is achieved. In such circumstances the combination of containment shield thickness and material type with catch layer 32 will be sufficient to resist rupture propagation in that part of the casing whilst the combination of containment shield 31 thickness and material as well as catch layer 33 will again be tuned to the expected potential rupture threat at that parts of the casing 30. In such circumstances weight can be minimised in terms of material types and thicknesses in the shield 31 and catch layers 32, 33 to achieve best operational performance for least weight or at least to provide a desired weight distribution in the casing 30 as required.

Normally the catch layer will act as a debris shield as indicated. The catch layers 32, 33 may be formed from a composite material such as aramid which is either woven or carbon wound to achieve an appropriate performance in use. It will also be understood that each catch layer 32, 33 may comprise a single piece of material secured about the casing 30 or multiple pieces or a spiral wound bandage or otherwise secured around the casing as required.

As depicted in Figure 1 typically the catch layer 32, 33 will be an overlay directly upon the containment shield 31 in order to act as a restraint upon flap development from rupture cracks at an initial percussive nucleation site. However, it will also be understood that where desired the catch layers may be spaced from the containment shield with a gap between them. In such circumstances better control with regard to rupture propagation is possibly achieved. Furthermore, the gap between the containment shield and the catch layer may be uniform or variable with the relationship and association between the shield and the catch layer substantially parallel or angled as required. It will be appreciated that it is containment of debris release which is the general objective of the casing 30 such that, although juxtaposed overlay of the catch layer upon the containment shield is the typical and generally normal configuration, in some circumstances in order to achieve resistance to rupture propagation spacing and otherwise may be provided. It will also be appreciated that a filler material such as an energy absorbing foam or otherwise may be provided between the containment shield and the catch layer in accordance with aspects of the present invention.

A particular aspect of the present invention which distinguishes from the prior arrangements is acceptance that the containment shield will be ruptured within the expected operational range of potential fragmentation. Prior systems have been designed to avoid any cracking or creation of holes in the casing. It will be appreciated previously it was believed cracking may then lead to rip rupture propagation and flapping to potentially allow release of debris from such high energy percussive impact objects as fan blade sections.

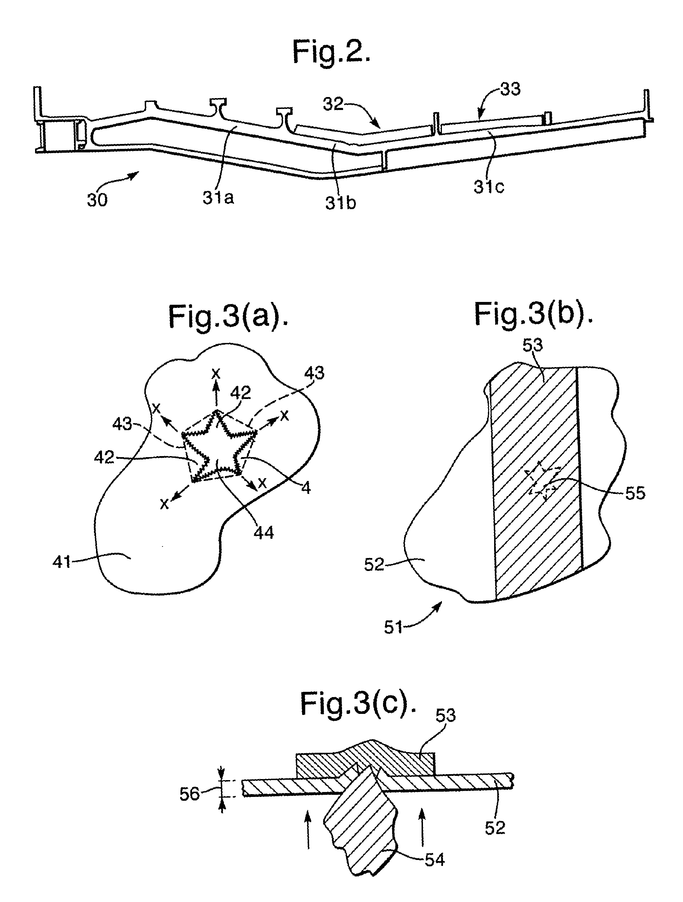

Figure 3 provides schematic illustrations demonstrating the effectiveness of a catch layer in accordance with aspects of the present invention. Thus, as depicted in Figure 3a a typical prior containment shield 41 simply comprises a thickness of material designed to contain percussive impacts of an object. In such circumstances as described above the capability of the containment shield 41 forming a casing in accordance with prior systems was dependent upon the thickness, material type and composition of the shield 41. If insufficiently thick material has insufficient rupture strength as illustrated impact by an object such as a high energy fan blade fragment would initially rupture and then rip the containment shield open. Such an arrangement is depicted in Figure 3a in that rips in a direction of arrowheads X will develop and rupture creating flaps 42 which will broaden and bend about notional parts shown by broken line 43 until the size of an aperture 44 is sufficient to release potentially high energy projectile debris or object. It will be appreciated the response with regard to' flap 42 development and ripping in the direction of arrowheads X is relatively unpredictable and therefore as indicated prior casings were advantageously designed to be sufficiently thick in the appropriate material to ensure initial nucleation of apertures was prevented.

Figures 3b and Figure 3c respectively show schematically a casing arrangement 51 in accordance with aspects of the present invention. The casing 51 comprises a containment shield 52 and a catch layer 53. In the embodiment depicted the catch layer 53 only extends over a proportion of the containment shield 52 as indicated above. Such an arrangement is typical in view of the predictability with regard to expected percussive impingement object energies and sites in terms of a potential rupture threat.

As can be seen in Figure 3b and Figure 3c an impinging object 54 will still rupture the containment shield 52 to create an aperture 55. The aperture 55 is formed by rupture rips 56 propagating generally radially from an initial rupture nucleation site and with some flap creation. However, the aperture 55 is maintained as a relatively small hole as the overlaying catch layer 53 prevents or inhibits rip propagation. In effect as described above the catch layer acts as a bandage to inhibit separation along the rupture rip lines and direction. The catch layer 53 keeps the containment shield 52 together. In such resistance to rip and rupture propagation it will be understood that incident impingement object energy is absorbed and as indicated the size of the aperture 55 generally limited. In such circumstances release of the object 54 as debris is prevented by provision of the catch layer 53.

One aspect of the present invention is that relatively lighter weight casing for utilising in a gas turbine engine is achieved. The casing is relatively lightweight compared to prior casings which depended upon material compositions having a sufficient thickness to prevent any aperture rupture and cracking upon incident object impingement such as a fan blade fragment. Aspects of the present invention utilise.a thinner containment shield 31, 52 such that the thickness 56 of the containment shield 52 can be reduced and therefore a proportionate reduction in weight is achieved. Aspects of the present invention will allow some holes and cracks to develop in the containment shield 52 but these are prevented and inhibited from development to a size sufficient to allow the relatively large fragments to pass through the casing combination of the containment shield 52 and catch layer 53. It will be understood that generally with regard to gas turbine engines the fan blades will be designed to fragment in relatively predictable chunks. These chunks will be of relatively large size and therefore as indicated above will impinge upon the containment shield 52 in such sizes. By provision of a combination of a containment shield 31, 52 and a catch layer 33, 53 the primary objective of containment on release of such objects is achieved.

As indicated above generally the containment shield may be formed from a solid metal such as titanium or aluminium or a composite such as Kevlar. By aspects of the present invention it will be appreciated that the catch layer will generally overlay the containment shield where required in order to minimise the extra weight of the catch layer. By having the catch layer as an adjunct to the base containment shield it will be appreciated that existing casings may be augmented by addition of a catch layer in accordance with the present invention in view of increasing safety requirements or potential operational condition variations with respect to a gas turbine engine. In such circumstances where the potential for blade fragmentation or other object impingement upon the casing should increase with operational life it may be possible to provide an enhancement through a thicker or otherwise altered catch layer, that is to say change in material type or composition of the catch layer to improve the potential resistance to debris release in view of those expected or progressive changes in operational conditions.

Generally, as indicated above the catch layer and the containment shield will comprise surface to surface overlays to form a casing in accordance with aspects of the present invention. Such overlaying may be augmented through provision of a key surface to surface association between the containment shield and the catch layer. Thus, the containment shield and the catch layer may respectively incorporate grooves or castellations which are reciprocal with each other in order to prevent relative slip there between and also as indicated above potentially for providing additional rupture propagation resistance with regard to the containment shield.

As indicated above, generally casings in accordance with aspects of the present invention will be utilised with regard to gas turbine engines and particularly gas turbine engines used with respect to aircraft. In such circumstances release of debris as indicated can have severe consequences as indicated particularly if such debris impinges upon fuselage or control surface parts of the aircraft. However particularly in flight it will be understood that release of debris away from the aircraft may be more acceptable. In such circumstances although not normally desirable in accordance with aspects of the present invention it may be possible to provide as indicated a base containment shield with a catch layer which is tailored to the potential threat of debris release. Thus, the catch layer towards sensitive areas such as parts of the engine fuselage control surfaces or other engines may be thicker or otherwise designed and specified to ensure debris is not released in those directions whilst other areas, that is to say outwards and away from the aircraft may have a catch layer which is thinner and will prevent debris release throughout most debris released operations but not all. In such circumstances a catch layer and potentially a containment shield having different thicknesses about the annulus of a gas turbine engine may be provided again reducing weight.

## Claims

1. A casing (30) for a gas turbine engine, the casing comprising a containment shield (31) and a catch layer (32, 33) associated to one side of the containment shield (31) to restrain in use rupture propagation of the containment shield (31).

2. A casing as claimed in claim 1 wherein the catch layer lies over the containment shield.

3. A casing as claimed in claim 1 wherein the catch layer is spaced from the containment shield with a gap between them.

4. A casing as claimed in claim 3 wherein the gap has a variable width across the association between the shield and catch layer.

5. A casing as claimed in any preceding claim wherein the catch layer has a variable thickness.

6. A casing as claimed in any preceding claim wherein the catch layer is formed from a woven or carbon bonded composite material.

7. A casing as claimed in claim 6 wherein the composite material is aramid.

8. A casing as claimed in any preceding claim wherein the containment shield has a variable thickness.

9. A casing as claimed in any preceding claim wherein the containment shield and catch layer are substantially parallel to each other.

10. A casing as claimed in any of claims 1 to 8 wherein the containment shield and catch layer are angled relative to each other.

11. A casing as claimed in any preceding claim wherein the containment shield comprises an annulus for containment of an engine core.

12. A casing as claimed in any preceding claim wherein the catch layer comprises an annulus generally concentric about the containment shield.

13. A casing as claimed in any preceding claim wherein a further material is provided between the containment shield and the catch layer.

14. A casing as claimed in any preceding claim wherein the containment shield and catch layer are reciprocally sized and have reciprocal thicknesses to achieve a desired degree of restraint in use to rupture propagation.

15. A casing as claimed in any preceding claim wherein the catch layer is only associated with a part of the containment shield.

16. A casing as claimed in any preceding claim wherein the casing is designed to be proportionate to a potential rupture threat determined by a rupture object coming into percussive contact with the casing in use.

17. A casing as claimed in claim 16 wherein the percussive object utilised to determine the potential rupture threat is a fan blade of a gas turbine engine.

18. A gas turbine engine incorporating a casing as claimed in any preceding claim.

19. A gas turbine engine as claimed in claim 18 wherein in the gas turbine engine the catch layer is only associated with a containment shield at appropriate parts of the casing.'
